# EUROPÄISCHE PATENTSCHRIFT

(11) **EP 2 630 506 B1**
(45) Veröffentlichungstag und Bekanntmachung des Hinweises auf die Patenterteilung: **17.02.2021**
(21) Anmeldenummer: 11770064.1
(22) Anmeldetag: 19.09.2011
(51) Int. Cl.: G01P 15/08, G01P 15/125, G01P 15/18, G01L 9/12

(54) **MIKROMECHANISCHE VORRICHTUNG ZUR MESSUNG EINER BESCHLEUNIGUNG, EINES DRUCKS ODER DERGLEICHEN SOWIE ENTSPRECHENDES VERFAHREN**
MICROMECHANICAL DEVICE FOR MEASURING AN ACCELERATION, A PRESSURE OR THE LIKE AND A CORRESPONDING METHOD
DISPOSITIF MICROMÉCANIQUE POUR MESURER UNE ACCÉLÉRATION, UNE PRESSION OU ANALOGUES AINSI QUE PROCÉDÉ CORRESPONDANT

(30) Priorität: 20.10.2010 DE 102010042687
(43) Veröffentlichungstag der Anmeldung: 28.08.2013
(73) Patentinhaber: Robert Bosch GmbH, 70442 Stuttgart (DE)
(72) Erfinder: FEYH, Ando, Palo Alto, CA 94304-1223 (US); LEINENBACH, Christina, 66806 Ensdorf (DE); FRANKE, Axel, 71254 Ditzingen (DE); O`BRIEN, Gery, Palo Alto, CA 94304 (US)
(86) Internationale Anmeldenummer: PCT/EP2011/066209
(87) Internationale Veröffentlichungsnummer: WO 2012/052238

(56) Entgegenhaltungen:
- EP-A2- 2 151 691
- US-A1- 2004 231 420
- US-A1- 2006 185 433
- US-A1- 2010 117 167
- US-B1- 6 230 566

## Beschreibung

Die Erfindung betrifft eine mikromechanische Vorrichtung zur Messung einer Beschleunigung, eines Drucks oder dergleichen gemäß dem Oberbegriff des Anspruchs 1, wie aus der US 2004/0231420 A1 bekannt.

### Stand der Technik

Beschleunigungssensoren werden auf vielfältigen Gebieten eingesetzt. So kommen sie beispielsweise in neuerer Zeit häufig in Mobiltelefonen zum Einsatz, um eine Lageänderung des Mobiltelefons zu erkennen. Wird das Mobiltelefon beispielsweise in einer Ebene durch einen Benutzer gedreht, um das gewöhnlich rechteckförmige Display nicht längs sondern quer nutzen zu können, wird dies durch einen entsprechenden Beschleunigungssensor erkannt und dem Betriebssystem des Mobiltelefons weitergeleitet. Dieses berechnet dann anhand der durch den Beschleunigungssensor gemessenen Beschleunigung die geänderte Lage des Mobiltelefons und passt den Bildschirminhalt an die berechnete neue Lage durch eine entsprechende Drehung des Bildschirminhalts an, so dass ein Benutzer den Bildschirminhalt des Mobiltelefons in gewünschter Weise auch quer wahrnehmen kann.

Daneben werden Beschleunigungssensoren auch in Festplatten verwendet, um eine Beschädigung der Festplatte zu vermeiden. Der Beschleunigungssensor erkennt beispielsweise, wenn bei einem Einbau der Festplatte in einen Rechner diese versehentlich durch einen Benutzer fallengelassen wird. Der Beschleunigungssensor misst dann einen freien Fall der Festplatte und die Festplatte bewegt einen Schreib/Lesekopf der Festplatte vorsorglich in eine sichere Parkposition, so dass bei üblicherweise auftretenden Fallhöhen keine Beschädigung der Festplatte durch den Schreib/Lesekopf erfolgt, wenn diese auf den Boden auftrifft.

Die US 2010/117167 A1 beschreibt einen Halbleitersensor für eine dynamische Größe und Verfahren zu seiner Herstellung. Die EP 2 151 691 A2 beschreibt Systeme und Verfahren zur Erkennung einer linearen Beschleunigung außerhalb eines Flugzeugs mithilfe eines Closed-Loop-Linearantriebs-Beschleunigungsmessers. Die US 6 230 566 B1 beschreibt einen niederfrequenten Beschleunigungsmesser mit kapazitivem Abgriff. Die US 2006/185 433 A1 beschreibt einen MEMS-Beschleunigungssensor mit reduzierter Nichtlinearität. Die US 2004/231420 A1 beschreibt einen 3-Achsen-Beschleunigungssensor.

Eine Beschleunigung kann dabei beispielsweise mittels einer Kapazitätsänderung festgestellt werden. Hierzu sind ineinandergreifende Fingerelektroden in einer gemeinsamen Ebene an einer seismischen Masse und an einer Basis angeordnet. Dabei ist die seismische Masse beweglich gegenüber der Basis gelagert. Die Fingerelektroden der seismischen Masse und der korrespondierenden Fingerelektroden der Basis bilden zwischen den jeweiligen Elektroden Kapazitäten aus. Anhand einer Veränderung der Kapazitäten kann nun die entsprechende Auslenkung der seismischen Masse in x- bzw. y-Richtung in der Ebene der Fingerelektroden gemessen werden und damit die auf die seismische Masse wirkende Kraft, Beschleunigung, Druck etc. ermittelt werden.

Aus der US 2005/0092107 A1 ist eine Vorrichtung zur Messung einer Beschleunigung in zwei Dimensionen bekannt geworden, wobei eine Auslenkung in die dritte Dimension kompensiert wird. Die Messung einer Beschleunigung in x- und/oder y-Richtung erfolgt dabei mittels ineinandergreifenden Fingerelektroden einer seismischen Masse und eines Substrats. Um eine Beschleunigung oder Kraft auf die seismische Masse senkrecht zu der x- y-Ebene zu kompensieren, sind die Fingerelektroden des Substrats senkrecht zur x- y-Ebene beweglich angeordnet. Erfährt nun die seismische Masse eine Kraft mit einer Komponente senkrecht zur x- y-Ebene, wird die seismische Masse entsprechend in z-Richtung verschoben, also senkrecht zur x- y-Ebene. Die beweglich angeordneten Fingerelektroden des Substrats werden durch die in z-Richtung wirkende Kraft entsprechend gedreht. Insgesamt ändert sich damit die Kapazität zwischen den Fingerelektroden der seismischen Masse und den Fingerelektroden des Substrats auf Grund der sich ebenfalls auslenkenden Fingerelektroden des Substrats nicht. Damit wird eine in z-Richtung wirkende Kraftkomponente kompensiert.

Um eine Beschleunigung senkrecht zur x- y- Ebene messen zu können, ist es der Anmelderin aus einer weiteren Referenz bekannt, die seismische Masse als Wippe auszubilden. An der seismischen Masse kann dann an einer Seite der seismischen Masse parallel zur x-y-Ebene eine zusätzliche Elektrode und am Substrat senkrecht und beabstandet zur x-y-Ebene entsprechend ebenfalls eine zusätzliche Elektrode angeordnet werden, so dass diese eine Kapazität bilden, die sich bei Auslenkung der seismischen Masse senkrecht zur x- y- Ebene ändert. Anhand dieser Änderung wird dann die entsprechende Beschleunigung senkrecht zur x- y-Ebene ermittelt. Dies erfordert jedoch eine aufwendige Ausbildung des Substrats und der seismischen Masse und verteuert den entsprechenden Beschleunigungssensor.

### Offenbarung der Erfindung

Die in Anspruch 1 definierte mikromechanische Vorrichtung zur Messung einer Beschleunigung, eines Druckes oder dergleichen umfasst ein Substrat mit zumindest einer feststehenden Elektrode, eine am Substrat beweglich angeordnete seismische Masse, zumindest eine Masseelektrode, die an der seismischen Masse angeordnet ist wobei die feststehende Elektrode und die Masseelektrode in einer Messebene zur Messung einer Beschleunigung , eines Druckes oder dergleichen in der Messebene ausgebildet sind, und wobei die feststehende Elektrode und die Masseelektrode zur Messung einer senkrecht zur Messebene auf die seismischen Masse einwirkenden Beschleunigung, eines Druckes oder dergleichen, ausgebildet sind.

### Vorteile der Erfindung

Die in Anspruch 1 definierte mikromechanische Vorrichtung zur Messung einer Beschleunigung, eines Druckes oder dergleichen weist die Vorteile auf, dass damit auf einfache Weise bereits angeordnete Elektroden, die eine Beschleunigung oder einen Druck in einer x-y-Ebene messen, auch zur Messung einer Beschleunigung, eines Druckes oder dergleichen in einer Richtung senkrecht zur x- y-Ebene verwendet werden können. Dadurch entfallen zusätzliche Elektroden, die eine Beschleunigung in einer z-Richtung, das heißt einer Richtung senkrecht zur x- y-Ebene messen. Gleichzeitig ist die Vorrichtung auch einfach herstellbar bzw. das Verfahren einfach durchführbar, da die aufwendige Anordnung von zusätzlichen Elektroden am Substrat und an der seismischen Masse bzw. die Ausformung des Substrats auch z-Richtung vollständig entfallen kann.

Weitere Merkmale und Vorteile der Erfindung sind in den nachfolgenden abhängigen Ansprüchen beschrieben.

Erfindungsgemäß ist die seismische Masse drehbar um eine Drehachse ausgebildet, wobei die Drehachse in der Messebene angeordnet ist. Der damit erzielte Vorteil ist, dass damit zum einen eine aufwendige Rückführung der seismischen Masse in eine Ausgangslage entfallen kann, da zentral entsprechende Mittel vorgesehen werden können. Zum anderen ist damit auch eine einfache Möglichkeit der Auslenkung senkrecht zur Messebene gegeben.

Erfindungsgemäß umfasst die feststehende Elektrode zumindest zwei metallische erste Bereiche und die Masseelektrode zumindest einen metallischen zweiten Bereich, wobei die ersten und zweiten metallischen Bereiche zur Bildung der zumindest zwei Kapazitäten zusammenwirken. Damit wird auf einfache und kostengünstige Weise die Ausbildung von zwei Kapazitäten für eine Detektion der Richtung der Auslenkung der seismischen Masse senkrecht zur Messebene ermöglicht.

Sind die ersten und/oder zweiten metallischen Bereiche in Richtung senkrecht zur Messebene übereinander an der jeweiligen Elektrode angeordnet, kann die Messung der Kraft, der Beschleunigung, des Druckes oder dergleichen noch zuverlässiger erfolgen sowie gleichzeitig die Richtung der Auslenkung senkrecht zur x - y-Ebene bestimmt werden.

Erfindungsgemäß sind auf in Bezug auf die Drehachse gegenüberliegenden Seiten der seismischen Masse jeweils zumindest eine Masseelektrode an der seismischen Masse und jeweils zumindest eine feststehende Elektrode an dem Substrat angeordnet. Auf diese Weise wird die Zuverlässigkeit einer Messung eines Drucks, einer Beschleunigung oder dergleichen weiter gesteigert, da nun mehrere Elektroden auf verschiedenen Seiten zur Messung einer Auslenkung in z-Richtung zur Verfügung stehen.

Erfindungsgemäß sind jeweils obere erste Bereiche einer ersten feststehenden Elektrode mit jeweils unteren ersten Bereichen einer zweiten feststehenden Elektrode zur Messung einer Beschleunigung, eines Druckes oder dergleichen verschaltet. Eine derartige Anordnung ermöglicht eine erhebliche Reduzierung der Querempfindlichkeit der Vorrichtung. Wird die seismische Masse in z-Richtung ausgelenkt, so erfährt diese, wenn sie drehbar um eine zentrale Achse gelagert ist, auf der einen Seite der Drehachse eine positive Auslenkung und auf der anderen Seite der Drehachse eine entsprechende negative Auslenkung senkrecht zur Messebene. Die positive und negative Auslenkung kann dann ermittelt werden und mittels Differenzbildung der jeweiligen gemessenen Änderungen der Kapazitäten eventuelle Störeinflüsse eliminiert werden.

Gemäß einer weiteren vorteilhaften Weiterbildung der Erfindung umfassen die ersten und/oder zweiten metallischen Bereiche jeweils zumindest zwei übereinander angeordnete Metalllagen, die miteinander elektrisch verbunden sind, insbesondere mittels Durchkontaktierungen. Der Vorteil hierbei ist, dass damit übliche CMOS-Herstellungsverfahren verwendet werden können, welche einerseits kostengünstig und andererseits zuverlässig entsprechende metallischen Bereiche respektive Metalllagen bereitstellen können.

Gemäß einer weiteren vorteilhaften Weiterbildung der Erfindung umfassen die feststehende Elektrode und/oder die Masseelektrode zumindest eine abgeschiedene, insbesondere dielektrische, Schicht umfassen. Der erzielte Vorteil dabei ist, dass damit auf einfache und kostengünstige Weise die Elektroden hergestellt werden können und gleichzeitig die metallischen Bereiche voneinander als auch die die metallischen Bereiche bildenden Metalllagen voneinander isoliert werden.

### Kurze Beschreibung der Zeichnungen

Weitere Merkmale und Vorteile der Erfindung ergeben sich aus der nachfolgenden Beschreibung von Ausführungsbeispielen. Dabei zeigt
- Fig. 1: eine feststehende Elektrode und eine Masseelektrode einer Vorrichtung gemäß einer Ausführungsform der vorliegenden Erfindung;
- Fig. 2: eine schematische Darstellung einer Vorrichtung gemäß der Ausführungsform der Fig. 1 in Draufsicht auf eine x-y-Ebene;
- Fig. 3: feststehende Elektroden und Masseelektroden einer Vorrichtung gemäß der Ausführungsform der Fig. 1 sowie
- Fig. 4: Schritte eines Verfahrens gemäß einer Ausführungsform der vorliegenden Erfindung.

### Ausführungsformen der Erfindung

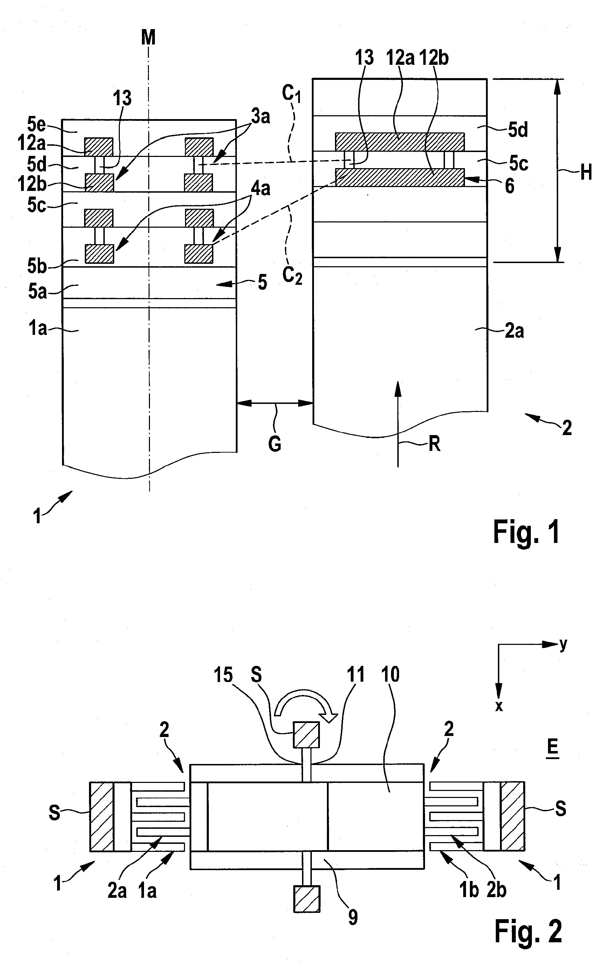

Fig. 1 zeigt eine feststehende Elektrode und eine Masseelektrode einer Vorrichtung gemäß einer Ausführungsform der vorliegenden Erfindung.

In Fig. 1 bezeichnet Bezugszeichen 1 eine feststehende Elektrode, die an einem Substrat S (in Fig. 1 nicht gezeigt) angeordnet ist. Die feststehende Elektrode 1 ist im Wesentlichen als Fingerelektrode 1a ausgebildet und in Fig. 1 im Querschnitt dargestellt. Im Endbereich der feststehenden Elektrode 1 weist diese übereinander angeordnete Schichten 5a-5e von Dielektrika 5 auf. In Fig. 1 sind fünf Lagen 5a-5e gezeigt. Die erste Lage 5a von unten nach oben gemäß Figur 1 umfasst lediglich ein Dielektrikum 5. Die über der ersten Lage 5a angeordnete zweite Lage 5b umfasst dabei im unteren Bereich links und rechts einer Symmetrieachse M der feststehenden Elektrode 1 eine Metalllage 12b, die über eine Durchkontaktierung 13 mit einer Metalllage 12a der benachbarten dritten Lage 5c verbunden ist. Dieser Metalllagenaufbau mit Metalllagen 12a, 12b und Durchkontaktierung 13 ist jeweils im Bereich sowohl des linken als auch des rechten Randes der feststehenden Elektrode 1 und symmetrisch zur Symmetrieachse M angeordnet. Die dritte Lage 5c umfasst - wie vorstehend ausgeführt - nur die untere Metalllage 12a.

Auf die dritte Lage 5c werden weitere Lagen 5d, 5e gestapelt, die im Wesentlichen im Aufbau der ersten und zweiten Lage 5a, 5b entsprechen. Auf diese Weise sind an der feststehenden Elektrode 1 jeweils links und rechts der Symmetrieachse M ein oberer erster und ein unterer erster metallischer Bereich 3a, 4a angeordnet, jeweils umfassend zwei Metalllagen 12a, 12b, die mittels zumindest einer Durchkontaktierung 13 verbunden sind.

In Fig. 1 rechts ist nun die Masseelektrode 2 im Querschnitt gezeigt, die an einer seismischen Masse 10 (in Fig. 1 nicht gezeigt) angeordnet ist. Diese ist ebenfalls als Fingerelektrode 2a ausgebildet. Die seismische Masse 10 und damit die Masseelektrode 2 ist dabei relativ zur feststehenden Elektrode 1 in Richtung R gemäß Figur 1 in vertikaler Richtung beweglich angeordnet. Im Wesentlichen entspricht der Aufbau der Masseelektrode 2 dem Aufbau der feststehenden Elektrode 1 gemäß Fig. 1. Im Unterschied zur feststehenden Elektrode 1 sind jedoch nur zwei Metalllagen 12a, 12b in der dritten bzw. vierten Lage 5c, 5d angeordnet. Diese sind wiederum über Durchkontaktierungen 13 miteinander verbunden. Auf diese Weise wird durch die beiden Metalllagen 12a, 12b und die sie verbindende Durchkontaktierung 13 ein zweiter metallischer Bereich 6 gebildet.

Zwischen dem zweiten metallischen Bereich 6 der Masseelektrode 2 und den beiden ersten metallischen Bereichen 3a, 4a der feststehenden Elektrode 1 werden zwei Kapazitäten C₁, C₂ gebildet: Die erste Kapazität C₁ wird zwischen dem oberen metallischen ersten Bereich 3a und dem zweiten metallischen Bereich 6 gebildet, die zweite Kapazität C₂ wird zwischen dem unteren ersten metallischen Bereich 4a und dem zweiten metallischen Bereich 6 der Masseelektrode 2 gebildet. Wird nun, wie in Fig. 1 angedeutet, die Masseelektrode 2 in Richtung R nach oben gegenüber der feststehenden Elektrode 1 verschoben respektive ausgelenkt, so steigt die Kapazität C₁ aufgrund des geringer werdenden Abstandes zwischen dem oberen ersten metallischen Bereich 3a der feststehenden Elektrode 1 und dem zweiten metallischen Bereich 6 der Masseelektrode 2, wohingegen die Kapazität C₂ abnimmt aufgrund des größer werdenden Abstandes zwischen dem unteren ersten metallischen Bereich 4a der feststehenden Elektrode 1 und dem zweiten metallischen Bereich 6 der Masseelektrode 2. In einer Ausgangslage sind die feststehende Elektrode 1 und die Masseelektrode 2 derart angeordnet, dass die jeweiligen Kapazitäten C₁ und C₂ gleich sind: C₁ = C₂.

Sowohl die feststehende Elektrode 1 und/oder die Masseelektrode 2 umfassen wie vorstehend ausgeführt übereinander angeordnete Lagen 5a-5e. Dieser Stapel aus Lagen 5a-5e kann beispielsweise durch Abscheiden der einzelner Lagen 5a-5e nach- und aufeinander hergestellt werden. Des Weiteren können die feststehende Elektrode 1 und/oder die Masseelektrode 2 auch einen Bereich eines Halbleiterträgers umfassen, beispielsweise Silizium.

Fig. 2 zeigt eine schematische Darstellung einer Vorrichtung gemäß der Ausführungsform der Fig. 1 in Draufsicht auf eine x-y-Ebene.

In Fig. 2 bezeichnet Bezugszeichen S ein Substrat, an dem mehrere Elektrodenfinger 1a einer feststehenden Elektrode 1 angeordnet sind. Zwischen den jeweiligen Elektrodenfingern 1a greifen entsprechende Elektrodenfinger 2a einer Masseelektrode 2 ein, die gemäß Figur 2 auf der linken Seite an einem Gehäuse 9 für eine seismische Masse 10 angeordnet sind. Auf der gemäß Figur 2 rechten Seite des Gehäuses 9 sind entsprechende Elektrodenfinger 2b angeordnet, die in Elektrodenfinger 1b des Substrats S eingreifen. Die jeweils benachbarten Elektrodenfinger 1a, 2a bzw. 1b, 2b bilden dabei jeweils entsprechende Kapazitäten C₁-C₄ aus, deren Änderung bei einer Relativbewegung der Elektrodenfinger 1a, 1b bzw. 2a, 2b zueinander zur Messung der auf die seismische Masse 10 einwirkenden Kraft, Beschleunigung etc. genutzt werden.

Das Gehäuse 9 für die seismische Masse 10 ist dabei um eine Drehachse 11 drehbar gelagert, wobei die Drehachse in der x-y-Messebene E und am Substrat S angeordnet ist. Die seismische Masse 10 ist dabei asymmetrisch im Gehäuse 9 und/oder zur Drehachse 11 angeordnet. Das Gehäuse 9 weist auf der rechten Seite gemäß Figur 1 die seismische Masse 10 auf wohingegen auf der linken Seite im Gehäuse 9 keine seismische Masse angeordnet ist. Weiterhin ist ein Rückstellungsmittel 15 in Form einer Torsionsfeder angeordnet, um die seismische Masse 10 gegebenenfalls aus einer Auslenkung senkrecht zur x-y-Messebene wieder in ihre Ausgangslage zurückzustellen.

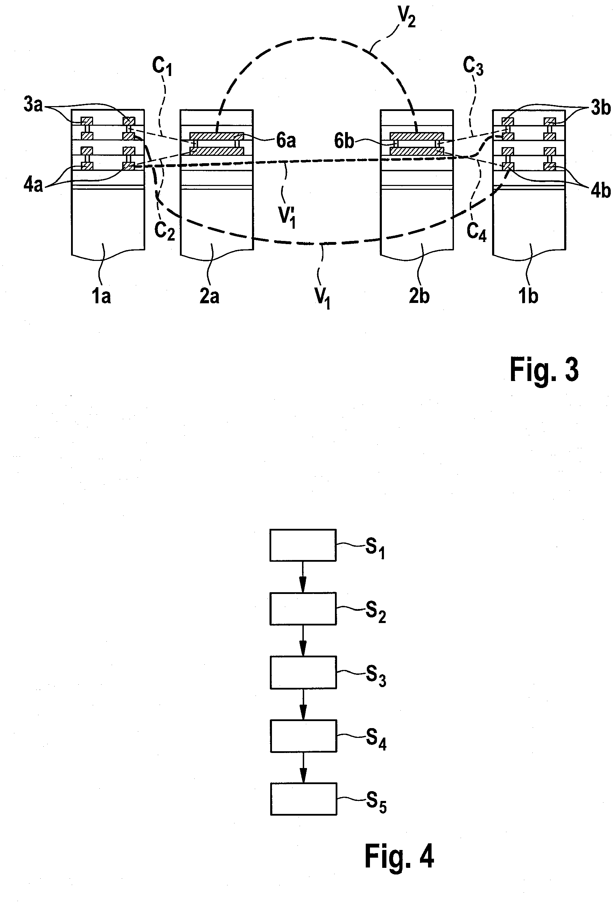

Fig. 3 zeigt feststehende Elektroden und Masseelektroden einer Vorrichtung gemäß der Ausführungsform der Fig. 1.

In Fig. 3 sind in schematischer Form eine Verschaltung V₁, V₂, V₁' der ersten und zweiten metallischen Bereiche 3a, 3b, 4a, 4b, 6a, 6b der feststehenden Elektrodenfinger 1a und 1b sowie der Masseelektrodenfinger 2a, 2b gezeigt. In Fig. 3 sind die feststehende Elektrode 1a, die Masseelektrode 2a, die Masseelektrode 2b und die feststehende Elektrode 1b von links nach rechts angeordnet. Die feststehende Elektrode 1b weist dabei einen entsprechenden Aufbau wie in Fig. 1 beschrieben auf, das heißt einen oberen ersten metallischen Bereich 3a und einen unteren ersten metallischen Bereich 4a auf der rechten Seite der Elektrode 1a. Dementsprechend weist die feststehende Elektrode 1b auf ihrer linken, d.h. auf ihrer der zweiten Masseelektrode 2b zugewandten Seite einen oberen ersten metallischen Bereich 3b und einen unteren ersten metallischen Bereich 4b auf. Zur Differenzauswertung von Kapazitätsänderungen von Kapazitäten C₁-C₄ werden der jeweils obere erste metallische Bereich 3a, 3b der feststehenden Elektrode 1a mit dem jeweiligen unteren ersten metallischen Bereich 4a, 4b der gegenüberliegenden feststehenden Elektrode 1b verschaltet. Diese Verschaltungen sind in Fig. 3 als unterbrochene Linien dargestellt und mit den Bezugszeichen V₁ und V_{1'} bezeichnet. Die zweiten metallischen Bereiche 6a und 6b der Masseelektroden 2a, 2b sind ebenfalls miteinander verschaltet, angedeutet durch die unterbrochene Linie V₂ in Fig. 3. Auf diese Weise ist eine Differenzauswertung der Änderung der jeweiligen Kapazitäten C₁-C₄ möglich.

Wirkt auf die seismische Masse 10 eine äußere Kraft, verschiebt sich die Masseelektrode 2a beispielsweise nach oben und korrespondierend die Masseelektrode 2b nach unten. Dabei erhöht sich die Kapazität C₁ und ebenfalls die Kapazität C₄, da der jeweilige Abstand zwischen den ersten und zweiten metallischen Bereichen 3a, 4b, 6 kleiner wird. Gleichzeitig verringert sich die Kapazität C₂ und C₃, da sich der Abstand zwischen den entsprechenden ersten und zweiten metallischen Bereichen 3b, 4a, 6 vergrößert. Durch die Verschaltung V₁, V_{1'}, V₂ ist eine Differenzenbildung zwischen den sich vergrößernden Kapazitäten C₁, C₄ und den sich verringernden Kapazitäten C₂, C₃ möglich; dies erhöht die Messgenauigkeit.

Die jeweiligen Dicken der dielektrischen Lagen 5a-5e der feststehenden Elektrode 1 und der Masseelektrode 2 liegen bei maximal 10 µm, vorzugsweise weniger 5 µm, vorteilhafterweise zwischen 1 bis 2 µm. Die ersten und zweiten metallischen Bereiche 3a, 3b, 4a, 4b weisen im Wesentlichen eine Dicke unter 2,5 µm, vorzugsweise unter 1,5 µm insbesondere zwischen 0,5 und 1 µm auf. Der Abstand G zwischen einer feststehenden Elektrode 1 und einer Masseelektrode 2 beträgt weniger als 5 µm, vorzugsweise zwischen 1 bis 3 µm. Ein metallischer Bereich 3a, 3b, 4a, 4b weist senkrecht zur zeicheneben gemäß Fig. 1 eine Erstreckung zwischen 10 µm und 500 µm, vorzugsweise zwischen 50 µm und 200 µm auf. Eine Gesamthöhe H der dielektrischen Schichten 5 und der metallischen Bereiche 3a, 3b, 4a, 4b, 6 beträgt zwischen 3 bis 10 µm, vorzugsweise zwischen 4 bis 8 µm.

Figur 4 zeigt Schritte eines Verfahrens gemäß einer Ausführungsform der vorliegenden Erfindung.

Das Verfahren zur Messung einer Beschleunigung, eines Druckes oder dergleichen, insbesondere geeignet zur Durchführung mit einer Vorrichtung gemäß zumindest einem der Ansprüche 1-7, gemäß Figur 4 umfasst die Schritte: Anordnen S₁ zumindest einer feststehenden Elektrode 1 an einem Substrat S und zumindest einer Masseelektrode 2 an einer am Substrat S beweglich angeordneten seismischen Masse 10, wobei die feststehende Elektrode 1 und die Masseelektrode 2 zur Messung einer Beschleunigung, eines Drucks, oder dergleichen in einer Messebene E zusammenwirken, Einwirken S₂ einer äußeren Kraft auf eine seismische Masse senkrecht zu der Messebene, Auslenken S₃ der seismischen Masse 10 auf Grund der äußeren Kraft in einer Richtung R senkrecht zur Messebene E, Messen S₄ einer Veränderung einer Kapazität C₁, C₂ zwischen der zumindest einen Masseelektrode 2, und der zumindest einen feststehenden Elektrode 1 sowie Ermitteln S₅ der Beschleunigung, des Drucks oder dergleichen anhand der gemessenen Veränderung der Kapazität C₁, C₂.

Obwohl die vorliegende Erfindung vorstehend anhand bevorzugter Ausführungsbeispiele beschrieben wurde, ist sie nicht darauf beschränkt sondern auf vielfältige Weise modifizierbar.

## Patentansprüche

1. Mikromechanische Vorrichtung zur Messung einer Beschleunigung, eines Drucks oder dergleichen in einer Messebene (E), umfassend
- ein Substrat (S),
- eine am Substrat (S) beweglich angeordnete seismische Masse (10), wobei die seismische Masse (10) drehbar um eine Drehachse (11) ausgebildet ist und die Drehachse (11) in der Messebene (E) angeordnet ist;
wobei auf in Bezug auf die Drehachse (11) gegenüberliegenden Seiten der seismischen Masse (10) jeweils zumindest eine Masseelektrode (2) an der seismischen Masse (10) und jeweils zumindest eine feststehende Elektrode (1) an dem Substrat (S) angeordnet sind;
- wobei die jeweilige zumindest eine feststehende Elektrode (1) und die jeweilige zumindest eine Masseelektrode (2) in der Messebene (E) zur Messung einer Beschleunigung, eines Drucks oder dergleichen in der Messebene (E) ausgebildet sind, und wobei die jeweilige zumindest eine feststehende Elektrode (1) und die jeweilige zumindest eine Massenelektrode (2) zur Messung einer senkrecht zur Messebene (E) auf die seismischen Masse (10) einwirkenden Beschleunigung, Druck oder dergleichen, ausgebildet sind, wobei die jeweilige zumindest eine feststehende Elektrode (1) zwei senkrecht übereinander angeordnete, obere und untere erste metallische Bereiche (3a, 4a; 3b, 4b) umfasst und die jeweilige zumindest eine Masseelektrode (2) zumindest einen zweiten metallischen Bereich (6a, 6b) umfasst, wobei die ersten Bereiche (3a, 4a; 3b, 4b) und der zweite Bereich ( 6a, 6b) zur Bildung einer ersten und einer zweiten Kapazität (C1, C2; C3, C4) zusammenwirken, wobei die jeweilige zumindest eine Z feststehende Elektrode (1) und die jeweilige zumindest eine Masseelektrode (2) derart angeordnet sind, dass die erste und zweite Kapazität (C1, C2; C3, C4) in einer Ausgangslage gleich sind und wobei bei einem Auslenken der jeweiligen zumindest einen Masseelektrode (2) in eine Richtung nach oben die erste Kapazität (C1; C3) steigt und die zweite Kapazität (C2; C4) abnimmt und wobei bei einem Auslenken der jeweiligen zumindest einen Masseelektrode (2) in eine entgegengesetzte Richtung die erste Kapazität (C1; C3) abnimmt und die zweite Kapazität (C2; C4) steigt;
**dadurch gekennzeichnet, dass**
die jeweils oberen ersten metallischen Bereiche (3a, 3b) der jeweiligen zumindest einen feststehenden Elektrode (1) auf einer Seite der seismischen Masse (10) mit den jeweils unteren ersten metallischen Bereichen (4a, 4b) der jeweiligen zumindest einen feststehenden Elektrode (1) auf der anderen Seite der seismischen Masse (10) zur Messung einer Beschleunigung, eines Drucks oder dergleichen verschaltet sind.

2. Mikromechanische Vorrichtung gemäß Anspruch 1, wobei die ersten und/oder zweiten metallischen Bereiche (3a, 3b, 4a, 4b, 6a, 6b) jeweils zumindest zwei übereinander angeordnete Metalllagen (12a, 12b) umfassen, die miteinander elektrisch verbunden sind, insbesondere mittels Durchkontaktierungen (13).

3. Mikromechanische Vorrichtung gemäß einem der Ansprüche 1 oder 2, wobei die feststehende Elektrode (1) und/oder die Masseelektrode (2) zumindest eine abgeschiedene, insbesondere dielektrische, Schicht (5a, 5b, 5c, 5d, 5e) umfassen.

## Claims

1. Micromechanical device for measuring an acceleration, a pressure or the like in a measuring plane (E), comprising
- a substrate (S),
- a seismic mass (10) arranged such that it can move on the substrate (S), wherein the seismic mass (10) is formed such that it can rotate about an axis of rotation (11) and the axis of rotation (11) is arranged in the measuring plane (E);
wherein, on opposite sides of the seismic mass (10) in relation to the axis of rotation (11), in each case at least one ground electrode (2) is arranged on the seismic mass (10) and in each case at least one stationary electrode (1) is arranged on the substrate (S);
- wherein the respective at least one stationary electrode (1) and the respective at least one ground electrode (2) are formed in the measuring plane (E) for measuring an acceleration, a pressure or the like in the measuring plane (E), and wherein the respective at least one stationary electrode (1) and the respective at least one ground electrode (2) are formed for measuring an acceleration, pressure or the like acting on the seismic mass (10) perpendicular to the measuring plane (E), wherein the respective at least one stationary electrode (1) comprises two, upper and lower first metallic first regions (3a, 4a; 3b, 4b) arranged perpendicularly one above the other and the respective at least one ground electrode (2) comprises at least one second metallic region (6a, 6b), wherein the first regions (3a, 4a; 3b, 4b) and the second region (6a, 6b) interact to form a first and a second capacitance (C1, C2; C3, C4), wherein the respective at least one stationary electrode (1) and the respective at least one ground electrode (2) are arranged in such a way that in an initial position the first and second capacitances (C1, C2; C3, C4) are equal and wherein, in the event of a deflection of the respective at least one ground electrode (2) in an upward direction, the first capacitance (C1; C3) increases and the second capacitance (C2; C4) decreases and wherein, in the event of a deflection of the respective at least one ground electrode (2) in an opposite direction, the first capacitance (C1; C3) decreases and the second capacitance (C2; C4) increases;
**characterized in that**
the respectively upper first metallic regions (3a, 3b) of the respective at least one stationary electrode (1) on one side of the seismic mass (10) are interconnected with the respectively lower first metallic regions (4a, 4b) of the respective at least one stationary electrode (1) on the other side of the seismic mass (10) for measuring an acceleration, a pressure or the like.

2. Micromechanical device according to Claim 1, wherein the first and/or second metallic regions (3a, 3b, 4a, 4b, 6a, 6b) respectively comprise at least two metal layers (12a, 12b) arranged one above another, which are connected to one another electrically, in particular by means of through contacts (13).

3. Micromechanical device according to either of Claims 1 and 2, wherein the stationary electrode (1) and/or the ground electrode (2) comprise at least one deposited, in particular dielectric, layer (5a, 5b, 5c, 5d, 5e).

## Revendications

1. Dispositif micromécanique permettant de mesurer une accélération, une pression ou similaires dans un plan de mesure (E), comprenant
- un substrat (S),
- une masse sismique (10) disposée de manière mobile sur le substrat (S), la masse sismique (10) étant réalisée de façon à pouvoir tourner autour d'un axe de rotation (11), et l'axe de rotation (11) étant disposé dans le plan de mesure (E) ;
dans lequel, sur des faces opposées par rapport à l'axe de rotation (11) de la masse sismique (10), respectivement au moins une électrode de masse (2) est disposée au niveau de la masse sismique (10) et respectivement au moins une électrode fixe (1) est disposée sur le substrat (S) ;
dans lequel ladite au moins une électrode fixe (1) respective et ladite au moins une électrode de masse (2) respective sont réalisées dans le plan de masse (E) pour mesurer une accélération, une pression ou similaires dans le plan de mesure (E), et ladite au moins une électrode fixe (1) respective et ladite au moins une électrode de masse (2) respective étant réalisées pour mesurer une accélération, une pression ou similaires agissant sur la masse sismique (10) perpendiculairement au plan de mesure (E), ladite au moins une électrode fixe (1) respective comprenant deux premières zones métalliques supérieures et inférieures (3a, 4a ; 3b, 4b) superposées verticalement, et ladite au moins une électrode de masse (2) respective comprenant au moins une deuxième zone métallique (6a, 6b), les premières zones (3a, 4a ; 3b, 4b) et la deuxième zone (6a, 6b) coopérant pour former une première et une deuxième capacité (C1, C2 ; C3, C4), ladite au moins une électrode fixe (1) respective et ladite au moins une électrode de masse (2) respective étant disposées de telle sorte que la première et la deuxième capacité (C1, C2 ; C3, C4) sont identiques dans la position de départ, et dans lequel, lors d'une déviation de ladite au moins une électrode de masse (2) respective dans une direction vers le haut, la première capacité (C1 ; C3) augmente et la deuxième capacité (C2 ; C4) diminue, et dans lequel, lors d'une déviation de ladite au moins une électrode de masse (2) respective dans une direction opposée, la première capacité (C1 ; C3) diminue et la deuxième capacité (C2 ; C4) augmente ;
**caractérisé en ce que** les premières zones métalliques supérieures (3a, 3b) respectivement de ladite au moins une électrode fixe (1) respective sont interconnectées sur un côté de la masse sismique (10) aux premières zones métalliques inférieures (4a, 4b) de ladite au moins une électrode fixe (1) respective de l'autre côté de la masse sismique (10) pour mesurer une accélération, une pression ou similaires.

2. Dispositif micromécanique selon la revendication 1, dans lequel les premières et/ou deuxièmes zones métalliques (3a, 3b, 4a, 4b, 6a, 6b) comprennent respectivement au moins deux couches de métal (12a, 12b) superposées qui sont reliées électriquement l'une à l'autre, en particulier au moyen de métallisations (13).

3. Dispositif micromécanique selon l'une quelconque des revendications 1 ou 2, dans lequel l'électrode fixe (1) et/ou l'électrode de masse (2) comprennent au moins une couche déposée (5a, 5b, 5c, 5d, 5e), en particulier une couche diélectrique.
